# EUROPÄISCHE PATENTANMELDUNG

(11) **EP 4 368 334 A1**
(43) Veröffentlichungstag der Anmeldung: **15.05.2024**
(21) Anmeldenummer: 23192619.7
(22) Anmeldetag: 22.08.2023
(51) Int. Cl.: B23Q 17/24, G01B 11/08, G01B 11/10

(54) **VORRICHTUNG ZUM KONTROLLIEREN UND/ODER VERMESSEN EINES IN EINER NUMERISCHEN WERKZEUGMASCHINE EINGESETZTEN ROTIERENDEN WERKZEUGS**

(30) Priorität: 07.10.2022 DE 102022125883
(71) Anmelder: Blum-Novotest GmbH, 88287 Grünkraut (DE)
(72) Erfinder: STAUBER, Steffen, 88287 Gruenkraut (DE); MAIER, Gregor, 88287 Gruenkraut (DE); MALLMANN, Guilherme, 88287 Gruenkraut (DE)
(74) Vertreter: Schmidt, Steffen J.

(57) **Zusammenfassung**

Eine Vorrichtung zum Kontrollieren und/oder Vermessen eines in einer numerischen Werkzeugmaschine eingesetzten rotierenden Werkzeugs (WZ) ist eingerichtet zum

- Abgeben und Empfangen eines aus mehreren Mess-Strahlen (12, 22) zusammengesetzten Mess-Strahls (32) für ein berührungsloses Abtasten des rotierenden Werkzeugs (WZ);

- Auswerten von durch eine Bewegung des rotierenden Werkzeugs (WZ) im zusammengesetzten Mess-Strahl (32) veränderten Strahleigenschaften des zusammengesetzten Mess-Strahls (32); und

- Bestimmen von Werkzeugeigenschaften aus den veränderten Strahleigenschaften des zusammengesetzten Mess-Strahls (32).

## Beschreibung

### Hintergrund

Hier werden ein Verfahren und eine Vorrichtung zur Kontrolle / Vermessung eines in einer numerischen Werkzeugmaschine eingesetzten rotierenden Werkzeugs beschrieben. Das Verfahren und die Vorrichtung können dazu dienen, sowohl den Zustand eines Werkzeugs als auch den Zustand von Komponenten der Werkzeugmaschine zu ermitteln. Details hierzu sind in den Ansprüchen definiert; aber auch die Beschreibung und die Zeichnung enthalten relevante Angaben zur Struktur und zur Funktionsweise sowie zu Varianten des Verfahrens und den Vorrichtungskomponenten.

Für hochpräzise Fräs- und Bohrarbeiten ist es von größter Bedeutung, dass das verwendete rotierende Werkzeug frei von Mängeln ist; Abnutzung zügig erkannt und Werkzeugbruch schnell detektiert wird. Eine stetige Vermessung des rotierenden Werkezeugs ist daher notwendig, um eine gleichbleibende Präzision der Fräs- oder Bohrarbeiten sicherzustellen.

Die in eine Werkzeugmaschine eingesetzte(n) Werkzeug(e) müssen vor ihrer ersten Verwendung und während des Betriebs in einem Vermessungsprozess präzise vermessen werden. Die daraus resultierenden Werkzeugparameter (bspw. Radius, Schneidlänge(n), Rundlauf) können somit mit einem Soll-Wert verglichen werden. Das Werkzeug kann durch die Werkzeugmaschine in einen Mess-Raum, einen zur Messung festgelegten Bereich, eines Mess-Strahls bewegt werden. Der Mess-Strahl detektiert die Nähe der Oberfläche beispielsweise mit einer kapazitiven, induktiven oder optischen Einrichtung. Mit Hilfe des Mess-Strahls werden entsprechende Messdaten erzeugt und an eine Steuerung weitergeleitet, die ein Computerprogramm enthalten kann. Aus der Positionsinformation der Werkzeugmaschine und den Messdaten der Mess-Vorrichtung kann die (numerische) Steuerung die genauen Abmessungen des Werkzeugs ermitteln.

### Stand der Technik

Für die Vermessung des rotierenden Werkezuges werden bspw. Schneidlänge(n) und Radius vermessen. Üblicherweise wird dafür ein einziger Messstrahl genutzt, aus dessen Abschattungssignalen die Schneidlängen und der Radius berechnet werden. Aufgrund der Größendifferenz des Radius zu den verhältnismäßigeren kleineren Schneiden, ist die gleichzeitige Messung dieser beiden Eigenschaften nicht möglich. Aktuell werden Schneidlänge und Radius in zwei separaten Messungen vermessen. Eine gleichzeitige Messung ist nicht möglich.

Das Dokument EP 3 413 150 A1 offenbart ein Verfahren, bei dem ein drehantreibbares Werkzeug kontrolliert und vermessen wird. Dazu wird eine durch das drehantreibare Werkzeug erzeugte Abschattung erfasst und ein dazu wenigstens annährend proportionales Signal erzeugt. Aus dem Signal wird ein Störsignalanteil und/oder Nutzsignalanteil bestimmt. In einem weiteren Schritt wird eine Information über den Nutzungsanteil zur Weiterleitung an eine Werkzeugmaschine bereitgestellt werden.

Das Dokument WO 2020 183154 A1 offenbart eine Vorrichtung zum Vermessen eines in einer Spindel eingefassten Werkzeugs. Die Vorrichtung offenbart auch eine Schließanordnung, die so angepasst ist, dass in einer geschlossenen Konfiguration der Sensor durch die Schließanordnung abgedeckt ist. Dadurch wird eine Verschmutzung des Sensors verhindert. In einer offenen Konfiguration kann ein Lichtstrahl durch eine erste Öffnung der Schließanordnung zum Sensor gelangen. Darüber hinaus ist die Schließanordnung so konfiguriert, dass sie zusätzlich eine zweite Öffnung bereitstellt, in der der Lichtstrahl zum Sensor gelangen kann, wobei die zweite Öffnung kleiner als die erste Öffnung ist. Auf diese Weise verfügt die Vorrichtung über einen verbesserten Schutz gegenüber Verunreinigungen, wie z. B. Späne und Kühlmittel, die im Arbeitsraum der Werkzeugmaschine vorhanden sind.

### Zu lösende Aufgabe

Unterschiedlich dimensionierte Strukturen eines rotierenden Werkzeugs sollen präzise und zeiteffizient vermessen werden.

### Lösung

Diese Aufgabe wird durch eine Vorrichtung nach dem Vorrichtungsanspruch 1 und durch ein Verfahren nach dem Anspruch 25 gelöst. Ausgestaltungen dieser Lösungen werden durch die auf diese Ansprüche jeweils zurückbezogenen Ansprüche definiert.

Eine Vorrichtung zum Kontrollieren und/oder Vermessen eines in einer numerischen Werkzeugmaschine eingesetzten rotierenden Werkzeugs ist eingerichtet zum
- Abgeben und Empfangen eines aus mehreren Mess-Strahlen zusammengesetzten Mess-Strahls für ein berührungsloses Abtasten des rotierenden Werkzeugs;
- Auswerten von durch eine Bewegung des rotierenden Werkzeugs im zusammengesetzten Mess-Strahl veränderten Strahleigenschaften des Mess-Strahls; und
- Bestimmen von Werkzeugeigenschaften aus den veränderten Strahleigenschaften des Mess-Strahls.

Ein Vorteil dieser Vorrichtung gegenüber Vorrichtungen aus dem Stand der Technik ist, dass mittels eines zusammengesetzten Mess-Strahles, der aus mehreren Mess-Strahlen besteht, verschiedenen dimensionierte Strukturen eines rotierenden Werkzeuges gleichzeitig vermessen werden können. Darüber hinaus wird die notwendige Werkzeugbewegung, die nötig ist, um das rotierende Werkzeug in seiner Gesamtstruktur zu vermessen, minimiert. Aufgrund des zusammengesetzten Messstrahls reduziert sich die Vermessungszeit für ein Werkzeug.

In einer Variante ist die Vorrichtung zum Abgeben und Empfangen eines durch eine adaptive Optik im Mess-Strahldurchmesser zeitlich einstellbaren/anpassbaren Mess-Strahls eingerichtet. In einer Variante ist die Vorrichtung zum Auswerten der durch eine Bewegung des rotierenden Werkezeugs im einstellbaren/anpassbaren Mess-Strahl veränderten Strahleigenschaften des Mess-Strahls eingerichtet. Die Vorrichtung kann dazu eingerichtet sein, Werkzeugeigenschaften, insbesondere Werkzeugumfang und/oder Schneidlänge(n) aus den veränderten Strahleigenschaften des zeitlich einstellbaren/anpassbaren Mess-Strahl zu bestimmen. Die Vorrichtung kann dazu eingerichtet sein, den Mess-Strahldurchmesser (zeitabhängig) zu modulieren. Die Vorrichtung kann dazu eingerichtet sein, den Mess-Strahldurchmesser in einer zu definierenden Modulations-Rate zu modulieren.

In einer Variante können sich die mehreren Mess-Strahlen in ihren Strahleigenschaften unterscheiden. Die Strahleigenschaften können einen (Mess-) Strahldurchmesser und/oder eine (Mess-)Strahlquerschnittsform umfassen. Die Vorrichtung kann weiter dazu eingerichtet sein, wenigstens eine der Strahleigenschaften zumindest eines der mehreren Mess-Strahlen zu verändern.

Dies hat den Vorteil, dass bei wechselnden rotierenden Werkzeugen die Strahleigenschaften auf ein Neues zu vermessendes rotierendes Werkzeug angepasst werden können, ohne dafür händisch Änderungen an der Vorrichtung vorzunehmen.

In einer Variante kann die Vorrichtung einen Lichtstrahlsender aufweisen. Der Lichtstrahlsender kann zum Abgeben des aus den mehreren Mess-Strahlen zusammengesetzten Mess-Strahls in eine Mess-Strecke für das berührungslose Abtasten des Werkzeugs eingerichtet sein. Die Vorrichtung kann einen Lichtstrahlempfänger umfassen, der dazu eingerichtet sein kann, den aus der Mess-Strecke kommenden zusammengesetzten Mess-Strahl zu empfangen. Der Lichtstrahlempfänger kann zum Abgeben mehrerer Abschattungssignale als Maß für eine Abschattung des zusammengesetzten Mess-Strahls durch das Werkzeug eingerichtet sein. Die Vorrichtung kann eine Auswerte- und Steuereinheit umfassen, die dazu programmiert und eingerichtet sein kann, die mehreren Abschattungssignale aus dem Lichtstrahlempfänger zu empfangen und zu verarbeiten. Die Auswerte- und Steuereinheit kann dazu programmiert und eingerichtet sein, eine Mitteilung an die Steuerung der Werkzeugmaschine zu veranlassen, womit die Werkzeugmaschine das rotierende Werkzeug in die Mess-Strecke und/oder in den modulierten Mess-Strahl hinein oder hinaus bewegen.

In einer Variante kann die Vorrichtung einen Lichtstrahlsender aufweisen. Der Lichtstrahlsender kann zum Abgeben eines modulierten Mess-Strahls in eine Mess-Strecke für das berührungslose Abtasten des Werkzeugs eingerichtet sein. Der modulierte Mess-Strahl kann eine zeitlich abhängige Einhüllenden-Modulation aufweisen. Die Vorrichtung kann einen Lichtstrahlempfänger umfassen, der dazu eingerichtet sein kann, den modulierten Mess-Strahl zu empfangen. Der Lichtstrahlempfänger kann zum Abgeben mehrerer Abschattungssignale als Maß für eine Abschattung des modulierten Mess-Strahls durch das Werkzeug eingerichtet sein. Die Vorrichtung kann eine Auswerte- und Steuereinheit umfassen, die dazu programmiert und eingerichtet sein kann, die mehreren Abschattungssignale aus dem Lichtstrahlempfänger zu empfangen und zu verarbeiten. Die Auswerte- und Steuereinheit kann dazu programmiert und eingerichtet sein, eine Mitteilung an die Steuerung der Werkzeugmaschine zu veranlassen, womit die Werkzeugmaschine das rotierende Werkzeug in die Mess-Strecke und/oder in den modulierten Mess-Strahl hinein- oder hinausbewegen.

Dies hat den Vorteil, dass ein hochflexibler Messaufbau realisiert werden kann, der sich einfach an unterschiedliche Werkzeuge anpassen lässt.

In einer Variante unterscheiden sich die mehreren Mess-Strahlen in ihren Mess-Strahldurchmessern/Strahldurchmessern. Die Vorrichtung kann eine Blende/Blendenanordnung, insbesondere eine elektronische oder mechanische oder elektro-mechanische einstellbare Blende/Blendenanordnung aufweisen, die dazu eingerichtet sein kann, den Mess-Strahldurchmesser/Strahldurchmesser eines oder mehrerer Mess-Strahlen oder des zusammengesetzten Mess-Strahls anzupassen/vorzugeben/einzustellen. Die einstellbare Blende kann als mehrere, konzentrisch angeordnete, ansteuerbare LCD-Ringe ausgebildet sein. Die Lichtstrahlsendereinheit kann dazu eingerichtet sein, einen Mess-Strahl abzugeben. Die Auswerte- und Steuereinheit kann dazu eingerichtet sein, die elektronisch einstellbare Blende zu steuern und einen Mess-Strahl in seinem Strahldurchmesser (zeitlich) alternierend/im Wechsel einzustellen oder zu modellieren. Die Auswerte- und Steuereinheit kann dazu eingerichtet sein, die Empfangszeit am Lichtstrahlempfänger mit der Einstellung des Mess-Strahldurchmessers durch die elektronische Blende aufeinander abzustimmen/zu synchronisieren. Die Auswerte- und Steuereinheit kann dazu eingerichtet sein, das Abschattungssignal anhand der Einstellung der elektronisch einstellbaren Blende/Blendenanordnung auszuwerten/analysieren. In einer Variante kann die Auswerte- und Steuereinheit einen ersten Zeitabschnitt ausgegeben, indem ein erster Mess-Strahldurchmesser/Strahldurchmesser eingestellt wird und der Lichtstrahlempfängereinheit mitgeteilt wird, dass in diesem ersten Zeitabschnitt ein erster Strahldurchmesser eingestellt wurde. Für einen weiteren Zeitabschnitt kann ein weiterer Mess-Strahldurchmesser/Strahldurchmesser eingestellt/vorgegeben werden. Von Zeitabschnitt zu Zeitabschnitt können sich die Mess-Strahldurchmesser/Strahldurchmesser unterscheiden. Von Zeitabschnitt zu Zeitabschnitt können die Mess-Strahldurchmesser/Strahldurchmesser gleich sein.

Der Lichtstrahlsender kann dazu eingerichtet sein, einen Mess-Strahl in die Mess-Strecke abzugeben und den einen Mess-Strahl in einer Strahleigenschaft zu modulieren. Der Lichtstrahlsender kann dazu eingerichtet sein, den Strahldurchmesser des einen Mess-Strahls zu modulieren. Der Lichtstrahlsender kann dazu eingerichtet sein, die Strahlquerschnittsform zu modulieren. Der Lichtstrahlempfänger kann dazu eingerichtet sein, den einen modulierten Mess-Strahl zu demodulieren und/oder zwei Abschattungssignale abzugeben/generieren.

Die Auswerte- und Steuereinheit kann weiter dazu programmiert und eingerichtet sein, über zumindest ein Steuersignal den dementsprechenden einen Mess-Strahldurchmesser/Strahldurchmesser der mehreren Mess-Strahlen anzupassen/einzustellen/vorzugeben. Die Auswerte- und Steuereinheit kann weiter dazu programmiert und eingerichtet sein, über zumindest ein Steuersignal jeweils einen der mehreren Mess-Strahlen einen Sendezeitabschnitt (einander) zuzuordnen, der mit einem Empfangszeitabschnitt am Lichtstrahlempfänger korrespondiert/übereinstimmt. Die Auswerte- und Steuereinheit kann zwischen Lichtstrahlsender und Lichtstrahlempfänger ein Zeitschlitzverfahren (Time Division Multiplexing) umsetzen. Jedem der mehreren Mess-Strahlen kann ein Sendezeitabschnitt zugewiesen werden, wobei sich die Sendezeitabschnitte nicht überschneiden und dem Empfänger mitgeteilt wird, wann welcher Mess-Strahl senden darf und/oder gesendet hat. Die Auswerte- und Steuereinheit kann dazu eingerichtet und programmiert sein, über Protokollsignale ein Sende- und Empfangsprotokoll zwischen dem Lichtstrahlsender und dem Lichtstrahlempfänger umzusetzen /zu koordinieren. Die Auswerte- und Steuereinheit kann dazu programmiert und eingerichtet sein, über zumindest ein Steuersignal den einen Mess-Strahl in einer Strahleigenschaft zu modulieren und/oder die durch veränderte Strahleigenschaften des einen modulierten Mess-Strahl erzeugten Abschattungssignale auszuwerten. Veränderte Strahleigenschaften im Sinne dieser Anmeldung sind jene, die durch den Einfluss des rotierenden Werkzeugs im zusammengesetzten oder modulierten oder einzelnen Mess-Strahl entstehen. Die Auswerte- und Steuereinheit kann dazu programmiert und eingerichtet sein, über Protokollsignale ein Modulations- und Demodulationsprotokoll zwischen dem Lichtstrahlsender und dem Lichtstrahlempfänger umzusetzen. Die Auswerte- und Steuereinheit kann dazu eingerichtet und programmiert sein, dem Lichtstrahlsender über Protokollsignale eine Modulationsrate vorzugeben und diese über Protokollsignale dem Lichtstrahlempfänger mitzuteilen. Somit kann der Lichtstrahlempfänger einen in zumindest einer modulierten Strahleigenschaft modulierten Mess-Strahl demodulieren und zumindest ein Abschattungssignale erzeugen.

Der Lichtstrahlsender kann dazu eingerichtet sein, einen zusammengesetzten Mess-Strahl abzugeben, insbesondere in die Mess-Strecke, wobei der zusammengesetzte Mess-Strahl unterschiedliche Werte einer Welleneigenschaft aufweisen kann. Der Lichtstrahlsender kann weiter eine erste adaptive Lichtstrahlsendereinheit und/oder eine zweite adaptive Lichtstrahlsendereinheit aufweisen. Die erste adaptive Lichtstrahlsendereinheit kann zum Abgeben eines ersten Mess-Strahls eingerichtet sein, der einen ersten Mess-Strahldurchmesser aufweist. Die zweite adaptive Lichtstrahlsendereinheit kann zum Abgeben eines zweiten Mess-Strahls eingerichtet sein, der einen zweiten Mess-Strahldurchmesser aufweist. Der Lichtstrahlsender kann einen Strahlkombinierer aufweisen, der dazu eingerichtet sein kann, den ersten und zweiten Mess-Strahl zu kombinieren/zusammensetzen und den zusammengesetzten Mess-Strahl in die Mess-Strecke abzugeben.

Die erste und zweite Lichtstrahlsendereinheit kann (jeweils) dazu eingerichtet sein, einen Mess-Strahl eines Wertes einer Welleneigenschaft abzugeben. Der Strahlkombinierer kann den ersten und zweiten Mess-Strahl hinsichtlich der Welleneigenschaft zu dem zusammengesetzten Mess-Strahl zusammensetzen/kombinieren. Die Werte der Welleneigenschaften der durch die erste und zweite Lichtstrahlsendereinheit angegebenen Mess-Strahlen können sich unterscheiden oder können die gleichen sein. Der Lichtstrahlsender kann dazu eingerichtet sein einen zusammengesetzten Mess-Strahl abzugeben, dessen mehrere Mess-Strahlen unterschiedliche Polarisationen und/oder unterschiedliche Wellenlänge aufweisen. Die erste und/oder zweite adaptive Lichtstrahlsendereinheit kann/können dazu eingerichtet sein, mehrere Mess-Strahlen in unterschiedlicher Polarisation und/oder unterschiedlicher Wellenlänge abzugeben.

Das Abgeben der mehreren Mess-Strahlen vom Lichtstrahlsender und das Empfangen der mehreren Mess-Strahlen am Lichtstrahlempfänger, insbesondere bei gleichen Werten einer Welleneigenschaft (bspw. gleiche Wellenlänge), kann durch ein Zeit-Multiplex-, insbesondere Zeitschlitz-Verfahren, oder ein Code-Multiplex-Verfahren koordiniert werden. Die Auswerte- und Steuereinheit kann weiter dazu programmiert und eingerichtet sein, über die Protokollsignale das Zeit-Multiplex oder das Code-Multiplex umzusetzen.

Die erste und/oder die zweite adaptive Lichtstrahlsendereinheit kann weiter eine Lichtstrahlquelle und eine durch einen, insbesondere adaptiven, Abstand von der Lichtstrahlquelle distanzierte Optik aufweisen. Der adaptive Abstand kann über ein elektromechanisches Bauelement eingestellt werden. Das elektromechanische Bauelement kann dazu eingerichtet sein, das Steuersignal zu empfangen.

Das elektromechanische Bauelement kann eine Schiene, auf der die Lichtstrahlquelle und die adaptive Optik über jeweils einen Schlitten zueinander verschiebbar angeordnet sind, aufweisen. Das elektromechanische Bauelement kann eine Empfangs- und Kontrolleinheit aufweisen, die zum Empfangen des Steuersignals und zum Abgeben eines Stellsignals eingerichtet sein kann. Das elektromechanische Bauelement kann einen Antrieb aufweisen, der zum Empfangen des Stellsignals und zum Einstellen einer Position der Lichtstrahlquelle und/oder einer Position der adaptiven Optik entlang der Schiene eingerichtet sein kann. Damit kann der adaptive Abstand eingestellt werden und sich eine einstellbare Brennweite ergeben.

Der Antrieb kann als piezoelektrischer Motor ausgebildet sein. Die adaptive Optik kann eine elektrisch einstellbare Brennweite aufweisen. Die adaptive Optik kann als elektrisch steuerbare Linse oder elektrisch steuerbare Flüssiglinse ausgebildet sein. Die adaptiven Optiken können jeweils eine elektrisch einstellbare Brennweite aufweisen. Die adaptiven Optiken können als elektrisch steuerbare Linse oder als elektrisch steuerbare Flüssiglinse ausgebildet sein.

Die Auswerte- und Steuereinheit kann dazu programmiert und eingerichtet sein, den Mess-Strahldurchmesser zumindest eines Mess-Strahls in dem zusammengesetzten Mess-Strahl durch Ansteuerung der adaptiven Optik und/oder des elektromechanischen Bauelements anzupassen/einzustellen/vorzugeben. Die Auswerte- und Steuereinheit kann dazu programmiert und eingerichtet sein, die mehreren Mess-Strahlen durch Ansteuerung der adaptiven Optiken unabhängig voneinander in ihrem Mess-Strahldurchmessern anzupassen/einzustellen/vorzugeben. Die adaptive Optik kann als LCD-Kristalle oder als ITO (Indium Tin Oxide) oder Chrom beschichtete Glasscheibe ausgebildet sein. Die adaptive Blende kann als eine Kamera-Iris, insbesondere eine elektromechanisch oder mechanisch einstellbare Kamera-Iris ausgebildet sein.

Der Lichtstrahlempfänger kann als Wellenfrontsensor, insbesondere Mikro-Linsen CCD Chip, ausgebildet sein. Der Lichtstrahlempfänger kann als wellenlängenselektiver Sensor ausgebildet sein. Der Lichtstrahlempfänger kann als Shack-Hartmann-Sensor, insbesondere als Hartmann-Shack-Wellenfrontsensor, ausgebildet sein.

Die erste und/oder zweite adaptive Lichtstrahlsendereinheit kann als Oberflächen-Emitter ausgebildet sein. Die erste und/oder zweite adaptive Lichtstrahlsendereinheit kann als vertical-cavity surface-emitting Laser (VCSEL) oder als vertical-cavity surface-emitting Laser Array (VCSEL Array) ausgebildet sein. Das VCSEL Array kann zur Ausgabe von strukturierter Beleuchtung/Belichtung/Laserstrahlen, insbesondere von Streifenmustern, eingerichtet sein. Die Streifenmuster werden in einer weiteren Variante durch Reflexion an einem Digital Micro Mirror Device, DMD, (digital-kontrollierter MOEMS (mikro-opto-elektromechanisches System), das mit einem passenden Optiksystem gekoppelt, Amplitude, Richtung und Phase des einfallenden Lichts anzupassen in der Lage ist.) So sind Streifen-Lichtmuster mit hoher Geschwindigkeit, Präzision und Effizienz zu erzeugen. Alternativ sind die Streifenmuster mit einer LCD-Anordnung (Liquid Crystal Display) Flüssig-Kristalle werden durch elektrische Impulse ausgerichtet. Die Kristalle bewirken bei unterschiedlicher Ausrichtung ungleiche Lichtdurchlässigkeit. So kann die Beleuchtung entsprechend verändert werden.

Der wellenlängenselektive Sensor kann als zweidimensionales Pixelarray mit wellenlängenselektivem Filter oder als Multi-Band-Pass Filter oder als zweidimensionales Pixelarray mit Multi-Band-Pass Filter ausgebildet sein. Das zweidimensionale Pixelarray mit wellenlängenselektivem Filter kann als Bayer Filter, insbesondere als den Wellenlängen der Lichtsendereinheiten angepassten Bayer Filter ausgebildet sein.

Das zweidimensionale Pixelarray mit wellenlängenselektivem Filter kann als CMOS mit Filter-On-Chip oder als Mosaik-Filter-On-Chip, insbesondere Mosaik-Filter-on-Chip CMOS ausgebildet sein. Der wellenlängenselektive Sensor kann als zweidimensionales Pixelarray mit Filter-On-Chip oder als Mosaik-Filter-On-Chip, insbesondere als Mosaik-Filter-on-Chip CMOS, ausgebildet sein.

Der Lichtstrahlempfänger kann eine erste Lichtstrahlempfängereinheit aufweisen, die zum Empfangen des ersten Mess-Strahls und/oder des zweiten Mess-Strahls; und zum Abgeben eines ersten und/oder zweiten Abschattungssignals eingerichtet sein kann. Der Lichtstrahlempfänger kann eine zweite Lichtstrahlempfängereinheit aufweisen, die zum Empfangen des zweiten und/oder ersten Mess-Strahls; und zum Abgeben eines zweiten und/oder ersten Abschattungssignals eingerichtet sein kann.

Der Lichtstrahlempfänger kann eine Lichtstrahlteilereinheit aufweisen, die dazu eingerichtet sein kann, den aus der Mess-Strecke kommenden zusammengesetzten Mess-Strahl in den ersten Mess-Strahl und den zweiten Mess-Strahl zu teilen. Die Auswerte- und Steuereinheit kann weiter dazu programmiert und eingerichtet sein, das erste und/oder das zweite Abschattungssignal aus der ersten und/oder zweiten Lichtstrahlempfängereinheit zu empfangen und zu verarbeiten und/oder auszuwerten. Die Auswerte- und Steuereinheit kann weiter dazu programmiert und eingerichtet sein, eine Mitteilung an die Steuerung der Werkzeugmaschine zu veranlassen, um eine Bewegung des rotierenden Werkzeugs in die Mess-Strecke hinein oder hinaus zu steuern/zu veranlassen/zu verursachen.

Die mehreren Mess-Strahlen können zueinander unterschiedliche Werte einer Welleneigenschaft aufweisen, und die Lichtstrahlteilereinheit kann weiter dazu eingerichtet sein, den zusammengesetzten Mess-Strahl wert-selektiv, insbesondere wert-selektiv hinsichtlich der Welleneigenschaft, in den ersten und zweiten Mess-Strahl zu teilen; und den ersten Mess-Strahl zur ersten Lichtstrahlempfängereinheit und den zweiten Mess-Strahl zur zweiten Lichtstrahlempfängereinheit; oder den ersten Mess-Strahl zur zweiten Lichtstrahlempfängereinheit und den zweiten Mess-Strahl zur ersten Lichtstrahlempfängereinheit zu leiten.

Der Lichtstrahlsender kann als nicht-adaptiver Lichtstrahlsender ausgebildet sein. Der Lichtstrahlsender kann dazu eingerichtete sein, mehrere Mess-Strahlen unterschiedlichen Strahldurchmessers und/oder mehrerer Mess-Strahlen gleichen Strahldurchmessers abzugeben.

Ein Verfahren zum Kontrollieren und/oder Vermessen eines in einer numerischen Werkzeugmaschine eingesetzten rotierenden Werkzeugs kann die Schritte umfassen:
- Ermitteln eines Umfangs und/oder Schneidlängen eines Werkzeuges mit einem ersten Mess-Strahl;
- Ermitteln des Umfangs und/oder der Schneidlängen eines Werkzeuges mit einem zweiten Mess-Strahl; und
- Kombinieren, insbesondere korreliertes Auswerten, von Messergebnissen unter Berücksichtigung einer Relativposition des Werkzeugs.

Der erste Mess-Strahl kann als ein kollimierter Mess-Strahl ausgebildet sein und/oder der zweite Mess-Strahl als ein fokussierter Mess-Strahl ausgebildet sein. Der zweite Mess-Strahl kann als ein kollimierter Mess-Strahl ausgebildet sein und/oder der erste Mess-Strahl kann als ein fokussierter Mess-Strahl ausgebildet sein.

Das Verfahren kann ein Schätzen des Umfangs des Werkzeugs mittels des kollimierten Mess-Strahls aufweisen. Das Verfahren kann das Korrigieren der Relativposition des Werkzeugs unter Berücksichtigung des geschätzten Umfangs umfassen. Das Verfahren kann das Ermitteln, insbesondere erneutes Ermitteln, des Umfangs und/oder der Schneidlänge(n) des Werkzeugs unter Verwendung des fokussierten Mess-Strahls aufweisen.

Die Auswerte- und Steuereinheit kann anhand eines und/oder beider und/oder mehrerer Abschattungssignale den Umfang und/oder die Schneidlänge(n) des Werkezeugs bestimmen/errechnen/quantifizieren/schätzen.

Die Bestimmung/Errechnung/Quantifizierung und/oder Schätzung des Umfangs und/oder der Schneidlänge(n) des Werkzeugs durch die Auswerte- und Steuereinheit kann mittels Frequenzanalyse, zum Beispiel FFT-Analyse der/des Abschattungssignale/Abschattungssignals umgesetzt werden.

Das Verfahren kann durch obige Vorrichtung oder ihre Varianten ausgeführt werden.

Ein Verfahren zum Kontrollieren und/oder Vermessen eines in einer numerischen Werkzeugmaschine eingesetzten rotierenden Werkzeugs, kann das Vermessen eines Werkzeugs mit einem Mess-Strahl umfassen. Das Verfahren kann das verändern des Mess-Strahldurchmessers/ Strahldurchmessers umfassen. Der Mess-Strahl kann einen Strahldurchmesser aufweisen, der durch die adaptive Lichtstrahlsendereinheit verändert/eingestellt/angepasst wird. Der Mess-Strahl kann einen Strahldurchmesser aufweisen, der durch die adaptive Optik eingestellt/angepasst/vorgegeben wird. Das Verfahren kann ein erneutes Vermessen des Werkzeugs mit dem im Strahldurchmesser geänderten/eingestellten/angepassten Mess-Strahl aufweisen.

Ein Verfahren zum Messen und Kontrollieren einer, insbesondere nummerischen, Werkzeugmaschine und/oder Komponenten der Werkzeugmaschine anhand eines in die Werkzeugmaschine eingespannten rotierenden Referenzwerkzeuges umfasst die Schritte:
- Bereitstellen eines aus mehreren Mess-Strahlen zusammengesetzten Mess-Strahls;
- Bereitstellen des, insbesondere normierten oder vordefinierten, in die Werkzeugmaschine eingespannten rotierenden Referenzwerkzeugs;
- Bewegen des in die Werkzeugmaschine eingespannten rotierenden Referenzwerkzeugs in den zusammengesetzten Mess-Strahl;
- Erzeugen mehrerer durch das rotierende Referenzwerkzeug entstehenden Abschattungssignale als Maß für eine Abschattung des zusammengesetzten Mess-Strahls oder des ersten und zweiten Mess-Strahls durch das rotierende Referenzwerkzeug;
- Bestimmen von Frequenzanteilen aus den Abschattungssignalen als Maß für durch die Werkzeugmaschine und/oder Komponenten in das rotierende Referenzwerkzeug induzierte Schwingungen;
- Bereitstellen einer Information über den Frequenzanteil und/oder Weiterleitung der Information über den Frequenzanteil an einen Bediener oder an ein Ausgabegerät.

Das Bereitstellen eines aus mehreren Mess-Strahlen zusammengesetzten Mess-Strahls kann jegliche Varianten von oben erläuterten Strahlkombinationen umfassen. Dies sind in einer Variante auch solche Strahlkombinationen, wie sie bei einer Messung mit modulierten Strahl eingesetzt werden. Dabei hat in einer Variante die Modulierung eine Frequenz, die mindestens 2 mal größer ist, als die zu bestimmende(n) Frequenz(anteile).

In einer Variante des Verfahrens kann das Referenzwerkzeug bereits rotierend oder rotationsfrei/nicht-rotierend in den zusammengesetzten Mess-Strahl bewegt werden. In einer Variante kann das rotierende oder rotationsfreie/nicht-rotierende Referenzwerkzeug bis zu einem Abschattungs-Schwellwert oder einem gemeinsamen Abschattungs-Schwellwert des ersten und/oder zweiten Mess-Strahls in den zusammengesetzten Mess-Strahl bewegt werden und danach in Rotation versetzt werden. Der Abschattungs-Schwellwert kann etwa 25%, 50% oder 75%, insbesondere etwa 10% 20%, 30%, 40%, 60%, 70%, 80%, 90% der maximalen Abschattung des ersten und/oder zweiten Mess-Strahls, aufweisen. In einer koaxialen, insbesondere längs-koaxialen, Anordnung des ersten und des zweiten Mess-Strahls kann der Abschattungsschwellwert, insbesondere in etwa, 50% der maximalen Abschattung des ersten und des zweiten Mess-Strahls aufweisen. In einer Variante kann das rotationsfreie/ nicht-rotierende Referenzwerkzeug bis zu einer, insbesondere zu definierenden oder vom Bediener zu bestimmenden, Ausgangs-Position in den zusammengesetzten Mess-Strahl bewegt und danach in Rotation versetzt werden. In einer Variante kann das rotierende Referenzwerkzeug bis zu einer, insbesondere zu definierenden oder vom Bediener zu bestimmenden, Ausgangs-Position in den zusammengesetzten Mess-Strahl bewegt werden. In einer Variante des Verfahrens kann das Erzeugen der Abschattungssignale über einen Mess-Zeitraum oder mehrere Mess-Zeiträume erfolgen. Ein Mess-Zeitraum kann mit einer Umdrehung oder mehreren Umdrehungen des rotierenden Referenzwerkzeuges korrespondieren.

Die Lichtstrahlsendereinheiten und/oder die Lichtstrahlempfängereinheiten können auf unterschiedlichen oder - mittels einer Strahlumlenkung - auf denselben Seiten/Enden der Mess-Strecke angeordnet sein.

In einer Variante hat die Vorrichtung den Lichtstrahlempfänger und/oder einen zusätzlichen Lichtstrahlempfänger auf Seite des Lichtstrahlsenders oder der Lichtstrahlsendereinheit.

### Kurze Figurenbeschreibung

Weitere Merkmale, Eigenschaften und Vorteile der Vorrichtungen und der Verfahrensweisen sind der nachfolgenden Beschreibung in Verbindung mit der Zeichnung zu entnehmen. Mögliche Abwandlungen werden für einen Fachmann anhand der nachstehenden Beschreibung deutlich, in der auf die beigefügten Zeichnungen Bezug genommen ist. Dabei zeigen die Fig. schematisch die hier erörterten Vorrichtungen und erläutern deren Betrieb. In den Fig. gleiche oder analoge Teile sind im Einzelfall nicht individuell mit Bezugszeichen versehen.

Hierbei zeigen:
Fig. 1 ein Ausführungsbeispiel einer Vorrichtung zur Vermessung/Kontrolle eines rotierenden Werkzeugs in einer Werkzeugmaschine;
Fig. 2 eine Variante des Ausführungsbeispiels einer Vorrichtung zur Vermessung/Kontrolle eines rotierenden Werkzeugs in einer Werkzeugmaschine;
Fig. 3 eine Variante des Ausführungsbeispiels einer Vorrichtung zur Vermessung/Kontrolle eines rotierenden Werkzeugs in einer Werkzeugmaschine;
Fig. 4 ein Ausführungsbeispiel einer adaptiven Lichtstrahlsendereinheit;
Fig. 5 eine Variante des Ausführungsbeispiels einer Vorrichtung zur Vermessung/Kontrolle eines rotierenden Werkzeugs in einer Werkzeugmaschine; und
Fig. 6 eine Schematische Darstellung über den Zusammenhang zwischen Bewegung des rotierenden Bearbeitungswerkzeugs im zusammengesetzten Mess-Strahl und daraus resultierenden Abschattungssignale.
Fig. 7 eine schematische Darstellung des Zusammenhangs zwischen einer Bewegung eines rotierenden Referenzwerkzeugs im zusammengesetzten Mess-Strahl und daraus resultierenden Abschattungssignalen.

### Detaillierte Figurenbeschreibung

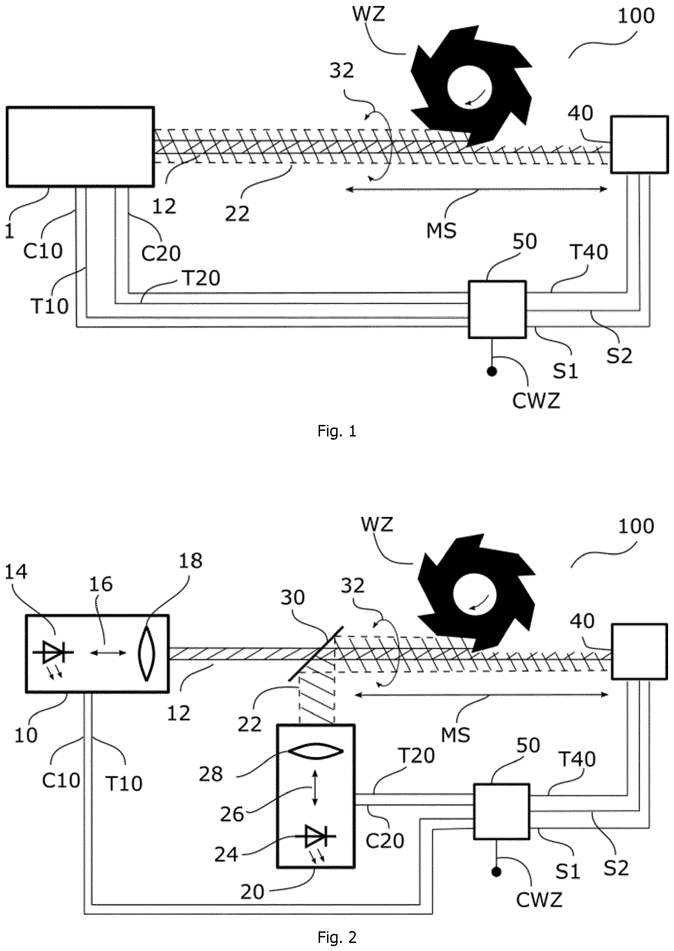

Die Fig. 1 zeigt eine Variante der Vorrichtung 100 zum Kontrollieren und/oder Vermessen eines in einer numerischen Werkzeugmaschine eingesetzten rotierenden Werkzeugs WZ. Die dargestellte Variante ist zum Abgeben und Empfangen eines aus mehreren Mess-Strahlen 12, 22 zusammengesetzten Mess-Strahls 32 für ein berührungsloses Abtasten des rotierenden Werkzeugs WZ eingerichtet. Darüber hinaus ist die dargestellte Variante zum Auswerten von durch eine Bewegung des rotierenden Werkzeugs WZ im zusammengesetzten Mess-Strahl 32 veränderten Strahleigenschaften des zusammengesetzten Mess-Strahls 32 eingerichtet. Des Weiteren ist die dargestellte Variante dazu eingerichtet, Werkzeugeigenschaften aus den veränderten Strahleigenschaften des zusammengesetzten Mess-Strahls 32 zu bestimmen. Die mehreren Mess-Strahlen 12, 22 unterscheiden sich in ihren Strahleigenschaften. In der Fig. 1 unterscheiden sich die mehreren Mess-Strahlen in ihren Strahldurchmessern. In einer nicht dargestellten Variante können sich die mehreren Mess-Strahlen zusätzlich oder nur in ihren Strahlquerschnittsform unterscheiden. Bei der in Fig. 1 dargestellten Variante ist die Vorrichtung dazu eingerichtet, wenigstens einen Strahldurchmesser der mehreren Mess-Strahlen 12, 22 zu verändern. In der dargestellten Variante weist die Vorrichtung einen Lichtstrahlsender 1, eingerichtet zum Abgeben des aus den mehreren Mess-Strahlen 12, 22 zusammengesetzten Mess-Strahls 32 eingerichtet zum Abgeben zusammengesetzten Mess-Strahls 32 in eine Mess-Strecke MS für das berührungslose Abtasten des Werkzeugs WZ auf. Des Weiteren weist die Vorrichtung 100 einen Lichtstrahlempfänger 40 auf, eingerichtet zum Empfangen des aus der Mess-Strecke MS kommenden zusammengesetzten Mess-Strahls 32 und zum Abgeben mehrerer Abschattungssignale S1, S2 als Maß für eine Abschattung des zusammengesetzten Mess-Strahls 32 durch das Werkzeug WZ. Des Weiteren weist die Vorrichtung in der Fig. 1 eine Auswerte- und Steuereinheit 50 auf, programmiert und eingerichtet zum Empfangen und Verarbeiten der mehreren Abschattungssignale S1, S2 aus dem Lichtstrahlempfänger 40; und zum Veranlassen einer Mitteilung CWZ an die Steuerung der Werkzeugmaschine zur Bewegung des rotierenden Werkzeugs WZ in die Mess-Strecke MS hinein oder hinaus. In der dargestellten Variante unterscheiden sich die mehreren Mess-Strahlen 12, 22 in ihren Mess-Strahldurchmessern. In einer nicht dargestellten Variante weist die Vorrichtung des Weiteren eine Blendenanordnung, insbesondere eine elektronisch oder mechanisch oder elektro-mechanisch einstellbare Blendenanordnung auf, die dazu eingerichtet ist, den Mess-Strahldurchmesser eines oder mehrerer Mess-Strahlen vorzugeben. In der dargestellten Variante weisen die beiden Mess-Strahlen 12, 22 die gleiche Wellenlänge auf. In einer nicht dargestellten Variante ist der Lichtstrahlsender dazu eingerichtet, einen zusammengesetzten Mess-Strahl abzugeben, der unterschiedliche Werte einer Welleneigenschaft aufweist. Die Auswerte- und Steuereinheit 50 ist weiter dazu eingerichtet und programmiert, über zumindest ein Steuersignal C10, C20 zumindest einen Mess-Strahldurchmesser der mehreren Mess-Strahlen 12, 22 anzupassen. In einer nicht dargestellten Variante ist die Auswerte- und Steuereinheit 50 weiter dazu eingerichtet jeweils einen der mehreren Mess-Strahlen 12, 22 einen Sendezeitabschnitt einander zuzuordnen, der mit einem Empfangszeitabschnitt am Lichtstrahlempfänger 40 korrespondiert. In der dargestellten Variante ist die Auswerte- und Steuereinheit 50 dazu programmiert und eingerichtet, zwischen dem Lichtstrahlsender 1 und dem Lichtstrahlempfänger 40 mittels Protokollsignalen T10, T20, T40 ein Sende- und Empfangsprotokoll zu implementieren. Damit können, obwohl beide Mess-Strahlen 12, 22 dieselbe Wellenlänge aufweisen, zwei Abschattungssignale S1, S2 von der Lichtstrahlempfängereinheit 40 erzeugt werden. In einer nicht dargestellten Variante kann der Lichtstrahlsender 1 als nicht-adaptiver Lichtstrahlsender ausgebildet sein.

Fig. 2 zeigt eine Variante der Vorrichtung 100. Die dargestellte Variante ist zum Abgeben und Empfangen eines aus mehreren Mess-Strahlen 12, 22 zusammengesetzten Mess-Strahls 32 für ein berührungsloses Abtasten des rotierenden Werkzeugs WZ eingerichtet. Darüber hinaus ist die dargestellte Variante zum Auswerten von durch eine Bewegung des rotierenden Werkzeugs WZ im zusammengesetzten Mess-Strahl 32 veränderten Strahleigenschaften des zusammengesetzten Mess-Strahls 32 eingerichtet. Des Weiteren ist die dargestellte Variante dazu eingerichtet, Werkzeugeigenschaften aus den veränderten Strahleigenschaften des zusammengesetzten Mess-Strahls 32 zu bestimmen. In der Fig. 2 unterscheiden sich die mehreren Mess-Strahlen 12, 22 in ihren Strahldurchmessern. In einer nicht dargestellten Variante können sich die mehreren Mess-Strahlen zusätzlich oder nur in ihren Strahlquerschnittsformen unterscheiden. Die in der Fig. 2 dargestellte Variante ist dazu eingerichtet, wenigstens einen Strahldurchmesser der mehreren Mess-Strahlen 12, 22 zu verändern. In der dargestellten Variante weist die Vorrichtung 100 eine erste adaptive Lichtstrahlsendereinheit 10, 20 auf, die dazu eingerichtet ist einen ersten Mess-Strahl 12, aufweisend einen ersten Mess-Strahldurchmesser, abzugeben. Die Vorrichtung 100 weist des Weiteren auf, eine zweite adaptive Lichtstrahlsendereinheit 20, die dazu eingerichtet ist einen zweiten Mess-Strahl 22, aufweisend einen zweiten Mess-Strahldurchmesser, abzugeben. In der dargestellten Variante weist die Vorrichtung einen Strahlkombinierer 30 auf, der dazu eingerichtet ist, den ersten und zweiten Mess-Strahl 12, 22 zu kombinieren und den zusammengesetzten Mess-Strahl 32 in die Mess-Strecke MS abzugeben. In der dargestellten Variante sind die erste und zweite adaptive Lichtstrahlsendereinheit 10, 20 jeweils dazu eingerichtet einen Mess-Strahl 12, 22 eines Wertes einer Welleneigenschaft abzugeben. Der Strahlkombinierer 30 ist dazu eingerichtet, den ersten und zweiten Mess-Strahl 12, 22 hinsichtlich der Welleneigenschaft zu dem zusammengesetzten Mess-Strahl 32 zusammenzusetzen, wobei sich die Werte der Welleneigenschaft für die erste und zweite adaptive Lichtstrahlsendereinheit 10, 20 unterscheiden. In der dargestellten Variante ist die erste und zweite adaptive Lichtstrahlsendereinheit 10, 20 dazu eingerichtet, jeweils einen Mess-Strahl 12, 22 abzugeben. Die Wellenlängen der Mess-Strahlen unterscheiden sich. In einer nicht dargestellten Variante ist die erste und zweite adaptive Lichtstrahlsendereinheit 10, 20 dazu eingerichtet, jeweils einen Mess-Strahl 12, 22 in einer Polarisation abzugeben. Des Weiteren weist die Variante in Fig. 2 einen Lichtstrahlempfänger 40 auf, eingerichtet zum Empfangen des aus der Mess-Strecke MS kommenden zusammengesetzten Mess-Strahls 32 und zum Abgeben mehrerer Abschattungssignale S1, S2 als Maß für eine Abschattung des zusammengesetzten Mess-Strahls 32 durch das Werkzeug WZ. Des Weiteren weist die Vorrichtung in der Fig. 2 eine Auswerte- und Steuereinheit 50 auf, programmiert und eingerichtet zum Empfangen und Verarbeiten der mehreren Abschattungssignale S1, S2 aus dem Lichtstrahlempfänger 40; und zum Veranlassen einer Mitteilung CWZ an die Steuerung der Werkzeugmaschine zur Bewegung des rotierenden Werkzeugs WZ in die Mess-Strecke MS hinein oder hinaus. In der dargestellten Variante unterscheiden sich die mehreren Mess-Strahlen 12, 22 in ihren Mess-Strahldurchmessern. In einer nicht dargestellten Variante ist die Auswerte- und Steuereinheit 50 weiter dazu eingerichtet jeweils einen der mehreren Mess-Strahlen 12, 22 einen Sendezeitabschnitt einander zuzuordnen, der mit einem Empfangszeitabschnitt am Lichtstrahlempfänger 40 korrespondiert. In einer nicht dargestellten Variante ist die Auswerte- und Steuereinheit 50 dazu programmiert und eingerichtet zwischen den Lichtstrahlsendereinheiten 10, 20 und dem Lichtstrahlempfänger 40 mittels Protokollsignale T10, T20, T40 ein Zeit-Multiplex umzusetzen. Damit kann, obwohl beide Mess-Strahlen 12, 22 die gleiche Wellenlänge aufweisen, zwei Abschattungssignale S1, S2 von der Lichtstrahlempfängereinheit 40 erzeugt werden. In einer nicht dargestellten Variante ist die Auswerte- und Steuereinheit 50 dazu programmiert und eingerichtet zwischen den Lichtstrahlsendereinheiten 10, 20 und dem Lichtstrahlempfänger 40 mittels Protokollsignale T10, T20, T40 ein Code-Multiplex umzusetzen. In einer nicht dargestellten Variante ist die Auswerte- und Steuereinheit 50 weiter dazu programmiert und eingerichtet ist, über ein Sendeprotokollsignale T10, T20 und ein Empfangsprotokollsignale T40 das Zeit-Multiplex umzusetzen. In einer nicht dargestellten Variante ist die Auswerte- und Steuereinheit 50 weiter dazu programmiert und eingerichtet, über Sendeprotokollsignale T10, T20 und ein Empfangsprotokollsignal T40 das Code-Multiplex umzusetzen. In der dargestellten Variante weist die erste und die zweite Lichtstrahlsendereinheit 10, 20 eine Lichtstrahlquelle 14, 24 und eine durch einen, insbesondere adaptiven, Abstand 16, 26 von der Lichtstrahlquelle distanzierte adaptive Optik 18, 28 auf. In der dargestellten Variante ist die Auswerte- und Steuereinheit 50 dazu eingerichtet und programmiert über zumindest ein Steuersignal C10, C20 zumindest einen Mess-Strahldurchmesser der mehreren Mess-Strahlen 12, 22 anzupassen. Hierbei kann die Auswerte- und Steuereinheit 50 über die Steuersignale C10, C20 die adaptiven Lichtstrahlsendereinheiten ansteuern und die/den Mess-Strahldurchmesser ändern. In einer nicht dargestellten Variante ist der Lichtstrahlempfänger 40 als Wellenfrontsensor, insbesondere Mikro-Linsen CCD Chip, und/ oder als wellenlängenselektiver Sensor ausgebildet. In einer nicht dargestellten Variante ist der wellenlängenselektive Sensor als zweidimensionales Pixelarray mit wellenlängen-selektivem Filter oder Multi-Band-Pass Filter ausgebildet. In einer nicht dargestellten Variante ist das zweidimensionale Pixelarray mit wellenlängenselektivem Filter als CMOS mit Filter-On-Chip oder Mosaik-Filter-On-Chip ausgebildet. In der dargestellten Variante sind die Lichtstrahlquellen 14, 24 als Laser ausgebildet. In einer nicht dargestellten Variante sind die erste und die zweite adaptive Lichtstrahlsendereinheit 10, 20 als Oberflächenemitter, insbesondere vertical-cavity surface-emitting Laser oder vertical-cavity surface-emittung laser array, ausgebildet, Die Auswerte- und Steuereinheit 50 ist in der dargestellten Variante weiter dazu programmiert und eingerichtet, den Mess-Strahldurchmesser zumindest eines Mess-Strahls 12, 22 in dem zusammengesetzten Mess-Strahl 32 durch Ansteuerung C10, C20 der adaptiven Optik 18, 28 einzustellen. Für eine genauere Analyse der Strukturen des Werkzeugs können beide Mess-Strahlen auf den gleichen Strahl-Durchmesser eingestellt werden. Die resultierenden Abschattungssignale S1 und S2 weisen daraufhin einen ähnlichen Verlauf auf. Die Auswerte- und Steuereinheit 50 kann die beiden Abschattungssignale S1, S2 als zwei Messungen derselben Strukturen wahrnehmen und wertet beide Abschattungssignale aus. Daraus ergibt sich eine genauere Vermessung/Abschätzung der Strukturen des Werkzeugs WZ und darüber hinaus kann ein Erwartungsmessbereich angegeben werden, in dem bspw. Radius oder Schneidlängen zu erwarten sind. Anders ausgedrückt, kann mit einer gleichzeitigen Vermessung mittels zwei Mess-Strahlen, die beide den gleichen Strahldurchmesser aufweisen, eine genauere Bestimmung von Strukturen erreicht werden, da die Abschattungssignale S1 und S2 korrelativ ausgewertet werden.

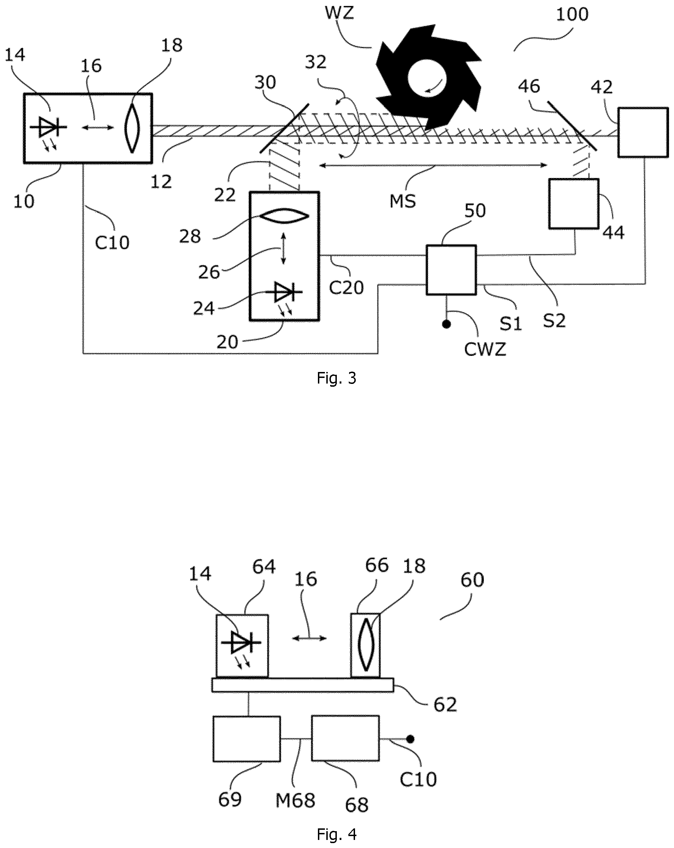

Fig. 3 zeigt eine Variante der Ausführungsform 100. Die dargestellte Variante ist zum Abgeben und Empfangen eines aus mehreren Mess-Strahlen 12, 22 zusammengesetzten Mess-Strahls 32 für ein berührungsloses Abtasten des rotierenden Werkzeugs WZ eingerichtet. Darüber hinaus ist die dargestellte Variante zum Auswerten von durch eine Bewegung des rotierenden Werkzeugs WZ im zusammengesetzten Mess-Strahl 32 veränderten Strahleigenschaften des zusammengesetzten Mess-Strahls 32 eingerichtet. Des Weiteren ist die dargestellte Variante dazu eingerichtet Werkzeugeigenschaften aus den veränderten Strahleigenschaften des zusammengesetzten Mess-Strahls 32 zu bestimmen. Die mehreren Mess-Strahlen 12, 22 unterscheiden sich in ihren Strahleigenschaften. In der Fig. 3 unterscheiden sich die mehreren Mess-Strahlen durch ihre Strahldurchmesser. In einer nicht dargestellten Variante können sich die mehreren Mess-Strahlen zusätzlich oder nur in ihren Strahlquerschnittsformen unterscheiden. Die in Fig. 3 dargestellte Vorrichtung 100 ist dazu eingerichtet, wenigstens einen Strahldurchmesser der mehreren Mess-Strahlen 12, 22 zu verändern. Die Vorrichtung 100 weist eine erste und eine zweite adaptive Lichtstrahlsendereinheit 10, 20 auf, die jeweils dazu eingerichtet sind einen Mess-Strahl 12, 22, aufweisend einen ersten oder zweiten Mess-Strahldurchmesser, abzugeben. In der dargestellten Variante weist die Vorrichtung einen Strahlkombinierer 30 auf, dazu eingerichtet, den ersten und zweiten Mess-Strahl 12, 22 zu kombinieren und den zusammengesetzten Mess-Strahl 32 in die Mess-Strecke MS abzugeben. In der dargestellten Variante sind die erste und zweite adaptive Lichtstrahlsendereinheit 10, 20 jeweils dazu eingerichtet einen Mess-Strahl 12, 22 eines Wertes einer Welleneigenschaft abzugeben. Der Strahlkombinierer 30 ist dazu eingerichtet, den ersten und zweiten Mess-Strahl 12, 22 hinsichtlich der Welleneigenschaft zu dem zusammengesetzten Mess-Strahl 32 zusammenzusetzen, wobei sich die Werte der Welleneigenschaft für die erste und zweite adaptive Lichtstrahlsendereinheit 10, 20 unterscheiden. In der dargestellten Variante ist die erste und zweite adaptive Lichtstrahlsendereinheit 10, 20 dazu eingerichtet, jeweils Mess-Strahlen 12, 22 in sich unterscheidenden Wellenlänge abzugeben. In einer nicht dargestellten Variante ist die erste und zweite adaptive Lichtstrahlsendereinheit 10, 20 dazu eingerichtet, jeweils Mess-Strahlen 12, 22 in unterschiedlicher Polarisation abzugeben. Des Weiteren weist die Vorrichtung 100 eine erste Lichtstrahlempfängereinheit 42 auf. Diese ist zum Empfangen des ersten Mess-Strahls 12 und zum Abgeben eines ersten Abschattungssignals S1 eingerichtet.

Die Vorrichtung 100 weist eine zweite Lichtstrahlempfängereinheit 44 auf, die zum Empfangen des zweiten Mess-Strahls 22 und zum Abgeben eines zweiten Abschattungssignals S2 eingerichtet ist. Die Vorrichtung weist des Weiteren eine Lichtstrahlteilereinheit 46 auf, die dazu eingerichtet ist, den aus der Mess-Strecke MS kommenden zusammengesetzten Mess-Strahl 32 in den ersten Mess-Strahl 12 und den zweiten Mess-Strahl 22 zu teilen. In der dargestellten Variante ist die Auswerte- und Steuereinheit 50 zum Empfangen und Verarbeiten des ersten und/oder zweiten Abschattungssignals S1, S2 aus den Lichtstrahlempfängereinheiten 42, 44 eingerichtet. Des Weiteren ist die Auswerte- und Steuereinheit 50 dazu programmiert und eingerichtet, eine Mitteilung CWZ an die Steuerung der Werkzeugmaschine zu veranlassen, die zur Bewegung des rotierenden Werkzeugs WZ in die Mess-Strecke MS hinein- oder hinausführt. In der dargestellten Variante weisen die Mess-Strahlen 12, 22 zueinander unterschiedliche Werte einer Welleneigenschaft auf, und die Lichtstrahlteilereinheit 46 ist weiter dazu eingerichtet, den zusammengesetzten Mess-Strahl wert-selektiv hinsichtlich der Welleneigenschaft in den ersten und zweiten Mess-Strahl 12, 22 zu teilen. In der dargestellten Variante weisen die mehreren Mess-Strahlen untereinander unterschiedliche Wellenlängen auf. Die Lichtstrahlteilereinheit teilt den zusammengesetzten Mess-Strahl den Wellenlängen entsprechend auf. Des Weiteren ist in der dargestellten Variante die Lichtstrahlteilereinheit 46 dazu eingerichtet den ersten Mess-Strahl 12 zur ersten Lichtstrahlempfängereinheit 42 und den zweiten Mess-Strahl 22 zur zweiten Lichtstrahlempfängereinheit 44 zu leiten. In einer nicht dargestellten Variante ist die Lichtstrahlteilereinheit 46 dazu eingerichtet den ersten Mess-Strahl 12 zur zweiten Lichtstrahlempfängereinheit 42 und den zweiten Mess-Strahl 22 zur ersten Lichtstrahlempfängereinheit 44 zu leiten. Die Auswerte- und Steuereinheit 50 ist in der dargestellten Variante weiter dazu programmiert und eingerichtet, den Mess-Strahldurchmesser zumindest eines Mess-Strahls 12, 22 durch Ansteuerung C10, C20 der adaptiven Optik 18, 28 einzustellen. Des Weiteren ist die Auswerte- und Steuereinheit 50 dazu programmiert und eingerichtet, die mehreren Abschattungssignale S1, S2 aus dem Lichtstrahlempfänger 40 zu empfangen und/oder zu verarbeiten. Die Auswerte- und Steuereinheit 50 ist weiter dazu programmiert und eingerichtet eine Mitteilung CWZ an die Steuerung der Werkzeugmaschine zu veranlassen, die eine Bewegung des rotierenden Werkzeugs WZ in die Mess-Strecke MS hinein oder hinaus einleitet. In der dargestellten Variante unterscheiden sich die mehreren Mess-Strahlen 12, 22 in ihren Mess-Strahldurchmessern. In der dargestellten Variante weisen die erste und die zweite Lichtstrahlsendereinheit 10, 20 jeweils eine Lichtstrahlquelle 14, 24 und eine durch einen, insbesondere adaptiven, Abstand 16, 26 von der Lichtstrahlquelle distanzierte adaptive Optik 18, 28 auf. Der adaptive Abstand wird über ein nicht in Fig. 3 dargestelltes elektromechanisches Bauelement 60 eingestellt, welches dazu eingerichtet ist das Steuersignal C10, C20 zu empfangen und/ oder umzusetzen. In der dargestellten Variante ist die Auswerte- und Steuereinheit 50 dazu eingerichtet und programmiert, über zumindest ein Steuersignal C10, C20 zumindest einen Mess-Strahldurchmesser der mehreren Mess-Strahlen 12, 22 anzupassen. Hierbei kann die Auswerte- und Steuereinheit 50 über die Steuersignale C10, C20 die adaptiven Lichtstrahlsendereinheiten ansteuern und die/den Mess-Strahldurchmesser ändern. In der dargestellten Variante ist die erste und zweite Lichtstrahlempfängereinheit 42, 46 als Wellenfrontsensor, insbesondere Mikro-Linsen CCD Chip, und/oder als wellenlängenselektiver Sensor ausgebildet. In einer nicht dargestellten Variante ist der wellenlängenselektive Sensor als zweidimensionales Pixelarray mit wellenlängen-selektivem Filter oder Multi-Band-Pass Filter ausgebildet. In einer nicht dargestellten Variante ist das zweidimensionale Pixelarray mit wellenlängenselektivem Filter als CMOS mit Filter-On-Chip oder Mosaik-Filter-On-Chip ausgebildet. In der dargestellten Variante sind die Lichtstrahlquellen 14, 24 als Laser ausgebildet. In einer nicht dargestellten Variante sind die erste und die zweite adaptive Lichtstrahlsendereinheit 10, 20 als Oberflächenemitter, insbesondere vertical-cavity surface-emitting Laser oder vertical-cavity surface-emittung laser array, ausgebildet.

Die in der Fig. 4 dargestellte Variante eines des elektromechanisches Bauelements 60 weist eine Schiene 62 auf, auf der die Lichtstrahlquelle 14 und die adaptive Optik 18 über jeweils einen Schlitten 64, 66 zueinander verschiebbar angeordnet sind. In der dargestellten Variante weist das elektromechanische Bauelement 60 eine Empfangs- und Kontrolleinheit 68 auf, die zum Empfangen des Steuersignals C10 und zum Abgeben eines Stellsignals M68 eingerichtet ist. Des Weiteren weist das elektromechanische Bauelement 60 einen Antrieb 69 auf, der zum Empfangen des Stellsignals M68 und zum Einstellen einer Position der Lichtstrahlquelle 14 und/oder einer Position der adaptiven Optik 18 entlang der Schiene 62 eingerichtet ist. Somit kann der adaptive Abstand 16 eingestellt werden und es ergibt sich eine einstellbare Brennweite. In einer nicht dargestellten Variante ist nur die adaptive Optik 18 oder nur die Lichtstrahlquelle 14 an ihrem jeweiligen Schlitten 64, 66 entlang der Schiene verschiebbar. In einer nicht dargestellten Variante ist weder die adaptive Optik 18 noch die Lichtstahlquelle 14 an ihrem jeweiligen Schlitten entlang der Schiene verschiebbar. In einer nicht dargestellten Variante ist der Antrieb 69 als piezoelektrischer Motor ausgebildet. In einer nicht dargestellten Variante weist die adaptive Optik 18 eine elektrisch einstellbare Brennweite auf. In der dargestellten Variante ist die adaptive Optik 18 als elektrisch steuerbare Linse, insbesondere elektrisch steuerbare Flüssiglinse, ausgebildet. Die nicht in Fig. 4 dargestellte Auswerte- und Steuereinheit 50 ist dazu programmiert und eingerichtet, den Mess-Strahldurchmesser zumindest eines Mess-Strahls 12, 22 in dem zusammengesetzten Mess-Strahl 32 durch Ansteuerung C10, C20 des elektromechanischen Bauelements 60 einzustellen. In einer nicht dargestellten Variante ist die nicht in Fig. 4 dargestellte Auswerte- und Steuereinheit dazu programmiert und eingerichtet, den Mess-Strahldurchmesser zumindest eines Mess-Strahls 12, 22 durch Ansteuerung C10, C20 der adaptiven Optik 18, 28 einzustellen.

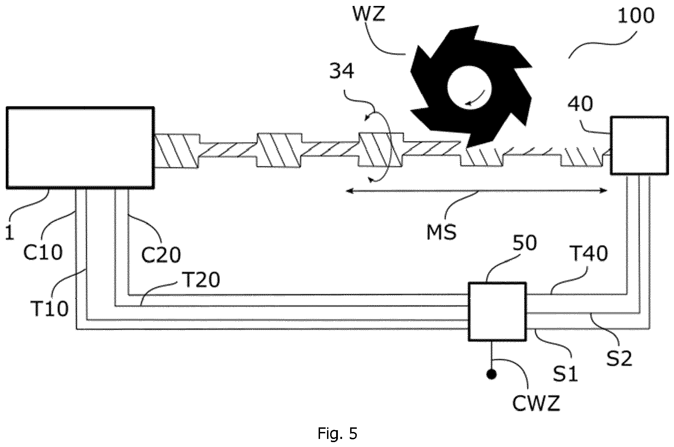

Die Fig. 5 zeigt eine Variante einer Ausführungsform der Vorrichtung zum Kontrollieren und/ oder Vermessen eines in einer numerischen Werkzeugmaschine eingesetzten rotierenden Werkzeugs WZ. Die dargestellte Variante ist zum Abgeben und Empfangen eines modulierten Mess-Strahls 34 für ein berührungsloses Abtasten des rotierenden Werkzeugs WZ eingerichtet. Darüber hinaus ist die dargestellte Variante zum Auswerten von durch eine Bewegung des rotierenden Werkzeugs WZ im modulierten Mess-Strahl 34 veränderten Strahleigenschaften des modulierten Mess-Strahls 34 eingerichtet. Des Weiteren ist die dargestellte Variante dazu eingerichtet, Werkzeugeigenschaften aus den veränderten Strahleigenschaften des modulierten Mess-Strahls 34 zu bestimmen. In dieser Variante ist die Vorrichtung 100 zum Abgeben und Empfangen eines im Strahldurchmesser zeitlich modulierten Mess-Strahls eingerichtet. Der Lichtstrahlsender 1 ist dazu eingerichtet, einen im Strahldurchmesser modulierten Mess-Strahl abzugeben. Der Lichtstrahlempfänger 40 ist dazu eingerichtet den im Strahldurchmesser modulierten Mess-Strahl 34 zu empfangen. In der gezeigten Variante erzeugt der Lichtstrahlempfänger 40 zwei Abschattungssignale S1 und S2. In der gezeigten Variante ist die Auswerte- und Steuereinheit 50 dazu programmiert und eingerichtet, die Abschattungssignale S1, S2 zum Empfangen und/oder Auszuwerten. Der Lichtstrahlempfänger 40 ist als CMOS-Sensor ausgebildet. Die Auswerte- und Steuereinheit 50 ist dazu programmiert und eingerichtet, über ein oder beide Steuersignale C10, C20 den Lichtstrahlsender 1 zu veranlassen den Strahldurchmesser zu modulieren. Hierbei wird von der Auswerte- und Steuereinheit 50 vorgegeben, insbesondere durch die Sendeprotokollsignale T10, T20 in welcher Rate und/oder zu welchem Zeitpunkt der Strahldurchmesser moduliert wird. Die Auswerte- und Steuereinheit 50 teilt dies über das Empfangsprotokollsignal T40 dem Lichtstrahlempfänger 40 mit, der daraufhin den Strahldurchmesser-modulierten Mess-Strahl demoduliert und die Abschattungssignale S1 und S2 ausgibt. Über eine Mitteilung CWZ veranlasst die Auswerte- und Steuereinheit 50 die Werkzeugmaschine, das Werkzeug in die Mess-Strecke MS hinein oder hinaus zu bewegen. Das Bereitstellen eines aus mehreren Mess-Strahlen zusammengesetzten Mess-Strahls kann umfasst in einer Variante auch solche Strahlkombinationen, wie sie bei einer Messung mit modulierten Strahl eingesetzt werden. Dabei hat in einer Variante die Modulierung eine Frequenz, die mindestens doppelt so groß ist, wie die zu bestimmenden Frequenzanteile.

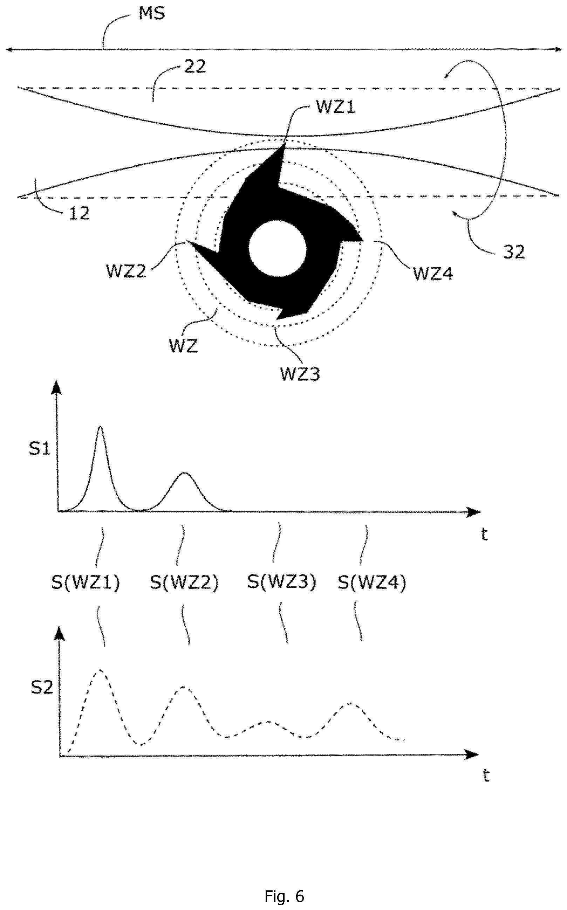

Die Fig. 6 zeigt beispielhaft die Abschattungssignale die durch die Rotation eines Bearbeitungswerkzeugs WZ in die Mess-Strecke MS entstehen. Das Werkzeug WZ weist vier Strukturen WZ1 bis WZ4 unterschiedlicher Größe auf. Der zusammengesetzte oder modulierte Mess-Strahl kann nach den obigen Varianten der Vorrichtung erzeugt werden und umfasst den Mess-Strahl 22 und den Mess-Strahl 12. Wenn sich das Werkzeug WZ um eine Umdrehung innerhalb der Mess-Strecke rotiert, gibt der Lichtstrahlempfänger 1 die Abschattungssignale S1 und S2 an die Auswerte- und Steuereinheit 50 ab. Die Abschattungssignale S1 und S2 indizieren das Ausmaß der Abschattung, also wie stark ein Empfänger von dem Werkzeug und/oder dessen Schneiden abgeschattet wird. Die Schneide WZ1 führt bei beiden Mess-Strahlen zur stärksten Abschattung, wie an den Stellen S(WZ1) und S(WZ2) im Diagramm ersichtlich wird. Die Schneide WZ2 wiederum zur zweitstärksten Abschattung. Die Schneiden WZ3 und WZ4 sind im Abschattungssignal S1 nicht zu erkennen. Diese Schneiden schatten den Mess-Strahl 12 nicht ab, womit der Empfänger, der das Abschattungssignal S1 ausgibt, keine Abschattung erfährt. Jedoch können die Schneiden WZ3 und WZ4 über den Mess-Strahl 22 vermessen werden, wie im Abschattungssignal an den Stellen S(WZ3) und S(WZ4) ersichtlich wird. Die nicht dargestellte Auswerte- und Steuereinheit 50 kann aus dem zeitlichen Verlauf und der Charakteristik der Abschattungssignale S1, S2 die Ist-Parameter des Werkzeugs WZ wie z.B. Rundlaufeigenschaften und/oder Schneidlängen ableiten/berechnen. In der dargestellten Variante sind die Mess-Strahlen derart eingestellt, sodass der Mess-Strahl 22 die Rundlaufeigenschaften und den Radius im Abschattungssignal S1 codiert, und der Mess-Strahl 12 die Schneidlängen und den Abstand zwischen den Schneiden im Abschattungssignal S2. Für den Fall, dass das Werkzeug WZ gewechselt oder getauscht wird, kommuniziert die Werkzeugmaschine mit der Auswerte- und Steuereinheit. Darin übermittelt die Werkzeugmaschine WZ, welches Werkzeug (Typ, Länge, Soll-Parameter) in die Mess-Strecke MS eingeführt wird. Die Auswerte- und Steuereinheit passt daraufhin die Strahldurchmesser der Mess-Strahlen 12, 22 an, sodass der zusammengesetzte Mess-Strahl 32 in der Lage ist, alle Strukturen am Werkzeug und deren Ausmaße zu erfassen/detektieren.

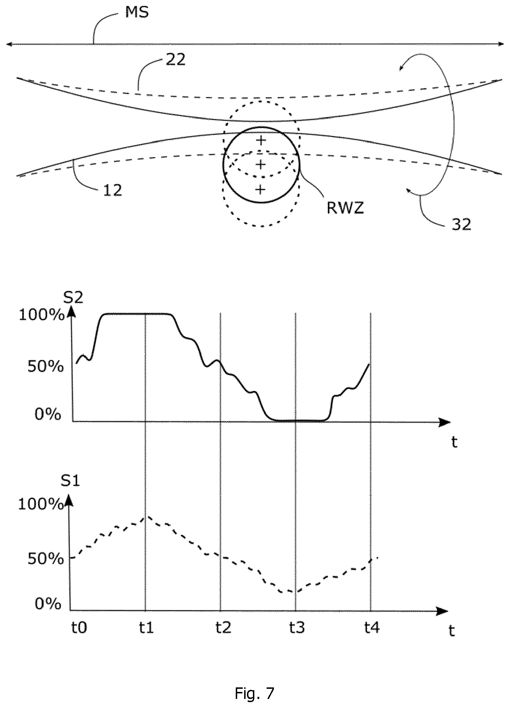

Die Fig. 7 zeigt beispielhaft die Abschattungssignale die durch die Rotation eines Referenzwerkzeugs RWZ in die Mess-Strecke MS entstehen. Das Referenzwerkzeug RWZ ist ein kreisrunder, maßhaltiger Zylinder. Die Werkzeugmaschine bzw. -komponenten (Antrieb, Spindel, Lager, Werkzeugaufnahme) erzeugen im Betrieb aufgrund von Verschleißerscheinungen, Unwuchten, etc. Schwingungen, die sich auf das Referenzwerkzeug RWZ übertragen. In der Fig. 7 wird ein aus mehreren Mess-Strahlen 12, 22 zusammengesetzter Mess-Strahl 32 bereitgestellt. Der zusammengesetzte oder modulierte Mess-Strahl kann nach mit obigen Varianten der Vorrichtung / des Verfahrens erzeugt werden und umfasst den zweiten Mess-Strahl 22 und den ersten Mess-Strahl 12. Des Weiteren wird ein, insbesondere normiertes oder vordefiniertes, Referenzwerkzeug RWZ bereitgestellt. In der gezeigten Variante wird das nicht rotierende Referenzwerkzeug RWZ bis zu einer Abschattungsschwelle in den zusammengesetzten Mess-Strahl 32 durch die Werkzeugmaschine bewegt. In der dargestellten Variante entspricht die Abschattungsschwelle 50% der maximalen Abschattung für beide Mess-Strahlen 12, 22. Dabei hat das Referenzwerkzeug RWZ eine Ausgangsposition erreicht. Die Werkzeugmaschine beginnt mit der Rotation des Referenzwerkzeugs RWZ welches sich im zusammengesetzten Mess-Strahl 32 befindet. In der gezeigten Variante induziert die Werkzeugmaschine und/oder die Komponente(n) beispielhaft eine Schwingung in das Referenzwerkzeug RWZ, die das Referenzwerkzeug lotrecht/quer zur Längsachse des zusammengesetzten Mess-Strahls 32 ausschlagen lässt. Dies wird an der gestrichelten Darstellung der Positionen des Referenzwerkzeuges deutlich. Mit einem Kreuz ist die jeweilige Position des Mittelpunktes des Referenzwerkzeuges verdeutlicht. In der dargestellten Variante werden durch das rotierende und schwingende Referenzwerkzeug RWZ die Abschattungssignale S1 und S2 erzeugt. Zum Zeitpunkt t0 beginnt das Referenzwerkzeug RWZ zu rotieren und aus der Ausgangsposition in den zusammengesetzten Mess-Strahl 32 hinein zu schwingen. Damit wird zwischen den Zeitpunkten t0 und t2 eine vollkommene Abschattung des Mess-Strahls 12 erreicht und eine steigende und abnehmende Abschattung des Mess-Strahls 22. Dies wird anhand der Abschattungssignale S1 und S2 deutlich. Zum Zeitpunkt t2 schwingt das Referenzwerkzeug über die Ausgangsposition aus dem zusammengesetzten Mess-Strahl hinaus. Daraufhin erfährt der Mess-Strahl 12 in einer maximalen Auslenkung des Referenzwerkzeuges keine Abschattung, das Abschattungssignal fällt auf 0%. Das Abschattungssignal S1 erfährt seine minimale Abschattung. Zum Zeitpunkt t4 schwingt das Referenzwerkzeug in seine Ausgangsposition zurück und hat folglich, zum Zeitpunkt t4, eine Periode der Schwingung lotrecht/quer zur Längsachse des zusammengesetzten Mess-Strahls 32 vollzogen. In den Abschattungssignalen sind neben der Grundschwingung ebenso Schwingungen höherer Ordnung zu sehen, die auf Vibrationen zurückzuführen sind. Im gezeigten Beispiel weisen die Vibrationen (eine) höhere Frequenz(en) als die Grundschwingung auf. Wenn sich das Referenzwerkzeug RWZ um eine Umdrehung innerhalb der Mess-Strecke rotiert, gibt der Lichtstrahlempfänger 1 die Abschattungssignale S1 und S2 an die Auswerte- und Steuereinheit 50 ab. Nicht in Fig. 7 dargestellt ist, dass die Frequenzanteile aus den Abschattungssignalen S1, S2 in der Auswerte -und Steuereinheit 50 bestimmt werden kann. Die Information über die Frequenzanteile erlaubt Rückschlüsse auf den Zustand der Werkzeugmaschine oder Komponenten. Die Abschattungssignale S1 und S2 indizieren das Ausmaß der Abschattung, also wie stark ein Empfänger von dem Referenzwerkzeug und/oder der überlagerten Schwingungen/ Vibration abgeschattet wird. Die ermittelten Schwingungen sind ein Indiz bei einer Beurteilung des Zustandes der Werkzeugmaschine und deren oben genannten Komponenten, z.B. der Spindel, der Spindellagerung, etc. In der Fig. 7 ist nicht dargestellt, dass die Information über den Frequenzanteil und/oder Weiterleitung der Information über den Frequenzanteil an einen Bediener oder an ein Ausgabegerät erfolgt.

Die vorangehend beschriebenen Varianten der Kontrolle und Vermessung eines in einer numerischen Werkzeugmaschine eingesetzten rotierenden Werkzeugs, deren Aufbau- und Betriebsaspekte, sowie die Varianten der Verfahrensweise dienen lediglich dem besseren Verständnis der Struktur, der Funktionsweise und der Eigenschaften; sie schränken die Offenbarung nicht etwa auf die Ausführungsbeispiele ein. Die Fig. sind teilweise schematisch. Dabei sind wesentliche Eigenschaften und Effekte zum Teil deutlich vergrößert dargestellt, um die Funktionen, Wirkprinzipien, technischen Ausgestaltungen und Merkmale zu verdeutlichen. Dabei kann jede Funktionsweise, jedes Prinzip, jede technische Ausgestaltung und jedes Merkmal, welches/welche in den Fig. oder im Text offenbart ist/sind, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Vorgehensweise zuzuordnen sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst. Auch die Ansprüche limitieren nicht die Offenbarung und damit die Kombinationsmöglichkeiten aller aufgezeigten Merkmale untereinander. Alle offenbarten Merkmale sind explizit auch einzeln und in Kombination mit allen anderen Merkmalen hier offenbart.

## Patentansprüche

1. Eine Vorrichtung zum Kontrollieren und/oder Vermessen eines in einer numerischen Werkzeugmaschine eingesetzten rotierenden Werkzeugs (WZ) ist eingerichtet zum
- Abgeben und Empfangen eines aus mehreren Mess-Strahlen (12, 22) zusammengesetzten Mess-Strahls (32) für ein berührungsloses Abtasten des rotierenden Werkzeugs (WZ);
- Auswerten von durch eine Bewegung des rotierenden Werkzeugs (WZ) im zusammengesetzten Mess-Strahl (32) veränderten Strahleigenschaften des zusammengesetzten Mess-Strahls (32); und
- Bestimmen von Werkzeugeigenschaften aus den veränderten Strahleigenschaften des zusammengesetzten Mess-Strahls (32).

2. Die Vorrichtung nach Anspruch 1, wobei
- die mehreren Mess-Strahlen (12, 22) sich in ihren Strahleigenschaften unterscheiden;
die Strahleigenschaften insbesondere einen Strahldurchmesser und/oder eine Strahlquerschnittsform umfassen; und/oder
die Vorrichtung weiter dazu eingerichtet ist, wenigstens eine der Strahleigenschaften zumindest eines der mehreren Mess-Strahlen (12, 22) zu verändern.

3. Die Vorrichtung nach einem der vorhergehenden Ansprüche, wobei die Vorrichtung aufweist:
- einen Lichtstrahlsender (1), eingerichtet zum Abgeben des aus den mehreren Mess-Strahlen (12, 22) zusammengesetzten Mess-Strahls (32) in eine Mess-Strecke (MS) für das berührungslose Abtasten des Werkzeugs (WZ);
- einen Lichtstrahlempfänger (40), eingerichtet zum Empfangen des aus der Mess-Strecke (MS) kommenden zusammengesetzten Mess-Strahls (32) und zum Abgeben mehrerer Abschattungssignale (S1, S2) als Maß für eine Abschattung des zusammengesetzten Mess-Strahls durch das Werkzeug (WZ);
- eine Auswerte- und Steuereinheit (50), programmiert und eingerichtet zum
- Empfangen und Verarbeiten der mehreren Abschattungssignale (S1, S2) aus dem Lichtstrahlempfänger (40); und zum
- Veranlassen einer Mitteilung (CWZ) an die Steuerung der Werkzeugmaschine zur Bewegung des rotierenden Werkzeugs (WZ) in die Mess-Strecke (MS) hinein oder hinaus.

4. Die Vorrichtung nach einem der vorhergehenden Ansprüche, wobei die mehreren Mess-Strahlen (12, 22) sich in ihren Mess-Strahldurchmessern unterscheiden, und/ oder die Vorrichtung weiter eine Blendenanordnung, insbesondere eine elektronisch oder mechanisch oder elektro-mechanisch einstellbare Blendenanordnung aufweist, die dazu eingerichtet ist, den Mess-Strahldurchmesser eines oder mehrerer Mess-Strahlen vorzugeben.

5. Die Vorrichtung nach einem der vorhergehenden Ansprüche, wobei der Lichtstrahlsender (1) dazu eingerichtet ist, einen Mess-Strahl (34) in die Mess-Strecke (MS) abzugeben und den einen Mess-Strahl (34) in einer Strahleigenschaft zu modulieren.

6. Die Vorrichtung nach einem der vorhergehenden Ansprüche, wobei der Lichtstrahlsender (1) dazu eingerichtet ist, den Strahldurchmesser des einen Mess-Strahls (34), insbesondere mit einer zu definierenden Modulationsrate, zu modulieren.

7. Die Vorrichtung nach einem der vorhergehenden Ansprüche, wobei die Auswerte- und Steuereinheit (50) weiter programmiert und dazu eingerichtet ist,
- über zumindest ein Steuersignal (C10, C20) zumindest einen Mess-Strahldurchmesser der mehreren Mess-Strahlen (12, 22) anzupassen; und/oder
- jeweils einen der mehreren Mess-Strahlen (12, 22) einen Sendezeitabschnitt einander zuzuordnen, der mit einem Empfangszeitabschnitt am Lichtstrahlempfänger (40) korrespondiert; und/oder
- über Protokollsignale (T10, T20, T40) ein Sende- und Empfangsprotokoll zwischen dem Lichtstrahlsender (1) und dem Lichtstrahlempfänger (40) umzusetzen; und/oder
- über zumindest ein Steuersignal (C10, C20) den einen Mess-Strahl (34) in einer Strahleigenschaft zu modulieren; und/oder
- über Protokollsignale (T10, T20, T40) ein Modulations- und Demodulationsprotokoll zwischen dem Lichtstrahlsender (1) und dem Lichtstrahlempfänger (40) umzusetzen.

8. Die Vorrichtung nach einem der vorhergehenden Ansprüche, wobei der Lichtstrahlsender (1) weiter aufweist:
- eine erste adaptive Lichtstrahlsendereinheit (10), eingerichtet zum Abgeben eines ersten Mess-Strahls (12) aufweisend einen ersten Mess-Strahldurchmesser;
- eine zweite adaptive Lichtstrahlsendereinheit (20), eingerichtet zum Abgeben eines zweiten Mess-Strahls (22) aufweisend einen zweiten Mess-Strahldurchmesser; und/oder
- einen Strahlkombinierer (30), eingerichtet zum Kombinieren des ersten und zweiten Mess-Strahls (12, 22), und zum Abgeben des zusammengesetzten Mess-Strahls (32) in die Mess-Strecke (MS); und/oder wobei
- der Lichtstrahlsender (1) dazu eingerichtet ist, einen zusammengesetzten Mess-Strahl (32) abzugeben, der unterschiedliche Werte einer Welleneigenschaft aufweist.

9. Die Vorrichtung nach einem der vorhergehenden Ansprüche, wobei
- die erste und zweite adaptive Lichtstrahlsendereinheit (10, 20) jeweils dazu eingerichtet sind, jeweils einen Mess-Strahl (12, 22) eines Wertes einer Welleneigenschaft abzugeben; und/oder
- der Strahlkombinierer (30) den ersten und zweiten Mess-Strahl (12, 22) hinsichtlich der Welleneigenschaft zu dem zusammengesetzten Mess-Strahl (32) zusammensetzt, wobei sich die Werte der Welleneigenschaft für die erste und zweite adaptive Lichtstrahlsendereinheit (10, 20) unterscheiden.

10. Die Vorrichtung nach einem der vorhergehenden Ansprüche, wobei
- der Lichtstrahlsender (1) oder die erste und zweite adaptive Lichtstrahlsendereinheit (10, 20) dazu eingerichtet sind, die mehreren Mess-Strahlen (12, 22) in unterschiedlicher Polarisation und/oder unterschiedlicher Wellenlänge in dem zusammengesetzten Mess-Strahl (32) abzugeben.

11. Die Vorrichtung nach einem der vorhergehenden Ansprüche, wobei ein Zeit-Multiplex oder ein Code-Multiplex das Abgeben der mehreren Mess-Strahlen (12, 22) vom Lichtstrahlsender (1) in dem zusammengesetzten Mess-Strahl (32) und das Empfangen der mehreren Mess-Strahlen (12, 22) in dem zusammengesetzten Mess-Strahl (32) am Lichtstrahlempfänger (40) koordiniert; und/oder wobei die Auswerte- und Steuereinheit (50) weiter dazu programmiert und eingerichtet ist, mittels Sendeprotokollsignalen (T10, T20) und einem Empfangsprotokollsignal (T40) das Zeit-Multiplex oder das Code-Multiplex zu implementieren; und/oder
wobei die erste und/ oder die zweite adaptive Lichtstrahlsendereinheit (10, 20) weiter aufweist:
- eine Lichtstrahlquelle (14, 24) und eine durch einen, insbesondere adaptiven, Abstand (16, 26) von der Lichtstrahlquelle distanzierte adaptive Optik (18, 28);
und/oder
wobei ein durch ein Steuersignal (C10, C20) gesteuertes elektromechanisches Bauelement (60) aufweist:
- eine Schiene (62), auf der die Lichtstrahlquelle (14) und die adaptive Optik (18) über jeweils einen Schlitten (64, 66) zueinander verschiebbar angeordnet sind;
- eine Empfangs- und Kontrolleinheit (68), eingerichtet zum Empfangen des Steuersignals (C10) und zum Abgeben eines Stellsignals (M68);
- ein Antrieb (69), eingerichtet zum Empfangen des Stellsignals (M68) und zum Einstellen einer Position der Lichtstrahlquelle (14) und/oder einer Position der adaptiven Optik (18) entlang der Schiene (62), um den adaptiven Abstand (16) einzustellen, woraus sich eine einstellbare Brennweite ergibt; und/oder
wobei
- der Antrieb (69) als piezoelektrischer Motor ausgebildet ist; und/oder
- die adaptive Optik (18) eine elektrisch einstellbare Brennweite aufweist;
und/oder
- die adaptive Optik (18) als elektrisch steuerbare Linse oder elektrisch steuerbare Flüssiglinse ausgebildet ist; und/oder
wobei die Auswerte- und Steuereinheit (50) weiter programmiert und eingerichtet ist, den Mess-Strahldurchmesser zumindest eines Mess-Strahls (12, 22) in dem zusammengesetzten Mess-Strahl (32) durch Ansteuerung (C10, C20) der adaptiven Optik (18, 28) und/oder des elektromechanischen Bauelements (60) einzustellen; und /oder
wobei der Lichtstrahlempfänger (40)
- als Wellenfrontsensor, insbesondere Mikro-Linsen CCD Chip, ausgebildet ist; und/oder
- als wellenlängenselektiver Sensor ausgebildet ist; und/oder
wobei die erste und/oder die zweite adaptive Lichtstrahlsendereinheit (10, 20) als Oberflächenemitter, insbesondere vertical-cavity surface-emitting Laser oder vertical-cavity surface-emitting Laser Array, ausgebildet ist; und/oder wobei der wellenlängenselektive Sensor als zweidimensionales Pixelarray mit wellenlängenselektivem Filter oder Multi-Band-Pass Filter ausgebildet ist; und /oder
wobei das zweidimensionale Pixelarray mit wellenlängenselektivem Filter als CMOS mit Filter-On-Chip oder Mosaik-Filter-On-Chip ausgebildet ist; und/oder wobei der Lichtstrahlempfänger (40) weiter aufweist:
- eine erste Lichtstrahlempfängereinheit (42), eingerichtet zum Empfangen des ersten Mess-Strahls (12) und zum Abgeben eines ersten Abschattungssignals (S1);
- eine zweite Lichtstrahlempfängereinheit (44), eingerichtet zum Empfangen des zweiten Mess-Strahls (22) und zum Abgeben eines zweiten Abschattungssignals (S2);
- eine Lichtstrahlteilereinheit (46), dazu eingerichtet, den aus der Mess-Strecke (MS) kommenden zusammengesetzten Mess-Strahl (32) in den ersten Mess-Strahl (12) und den zweiten Mess-Strahl (22) zu teilen; und
- und die Auswerte- und Steuereinheit (50)weiter dazu programmiert und eingerichtet ist, zum
- Empfangen und Verarbeiten des ersten und/oder zweiten Abschattungssignals (S1, S2) aus den Lichtstrahlempfängereinheiten (42, 44);
- Veranlassen einer Mitteilung (CWZ) an die Steuerung der Werkzeugmaschine zur Bewegung des rotierenden Werkzeugs (WZ) in die Mess-Strecke (MS) hinein oder hinaus; und/oder
wobei die mehreren Mess-Strahlen (12, 22) zueinander unterschiedliche Werte einer Welleneigenschaft aufweisen, und die Lichtstrahlteilereinheit (46) weiter dazu eingerichtet ist, den zusammengesetzten Mess-Strahl wert-selektiv hinsichtlich der Welleneigenschaft in den ersten und zweiten Mess-Strahl (12, 22) zu teilen, und den ersten Mess-Strahl (12) zur ersten Lichtstrahlempfängereinheit (42) und den zweiten Mess-Strahl (22) zur zweiten Lichtstrahlempfängereinheit (44) zu leiten; und/oder
wobei der Lichtstrahlsender als nicht-adaptiver Lichtstrahlsender ausgebildet ist.

12. Ein Verfahren zum Kontrollieren und/oder Vermessen eines in einer numerischen Werkzeugmaschine eingesetzten rotierenden Werkzeugs umfassend die Schritte:
- Ermitteln eines Umfangs und/oder Schneidlängen eines Werkzeuges (WZ) mit einem ersten Mess-Strahl;
- Ermitteln des Umfangs und/oder der Schneidlängen eines Werkzeuges mit einem zweiten Mess-Strahl;
- Kombinieren, insbesondere korreliertes Auswerten, von Messergebnissen unter Berücksichtigung einer Relativposition des Werkzeugs.

13. Das Verfahren nach Anspruch 12, wobei der erste Mess-Strahl als ein kollimierter Mess-Strahl ausgebildet ist und/oder der zweite Mess-Strahl als ein fokussierter Mess-Strahl ausgebildet ist; und/oder
wobei das Verfahren des Weiteren umfasst:
- Schätzen des Umfangs des Werkzeugs (WZ) mittels des kollimierten Mess-Strahls;
- Korrigieren der Relativposition des Werkzeugs (WZ) unter Berücksichtigung des geschätzten Umfangs;
- Ermitteln, insbesondere erneutes Ermitteln, des Umfangs und/oder der Schneidlängen des Werkzeugs (WZ) unter Verwendung des fokussierten Mess-Strahls;
und/oder
wobei die Schätzung und/oder Bestimmung des Umfangs und/oder die Schneidlängen des Werkzeugs mittels Frequenzanalyse, zum Beispiel FFT-Analyse, umgesetzt wird; und/oder
wobei das Verfahren durch eine Vorrichtung der Ansprüche 1 bis 12 ausgeführt wird.

14. Ein Verfahren zum Kontrollieren und/oder Vermessen eines in einer numerischen Werkzeugmaschine eingesetzten rotierenden Werkzeugs, umfassend die Schritte:
- Vermessung eines Werkzeugs mit einem Mess-Strahl, wobei der Mess-Strahl einen Strahldurchmesser aufweist;
- Verändern des Strahldurchmessers durch die adaptive Optik;
- erneutes Vermessen des Werkzeugs mit dem im Strahldurchmesser geänderten Mess-Strahl.

15. Ein Verfahren zum Messen und/oder Kontrollieren einer Werkzeugmaschine und/oder Komponenten der Werkzeugmaschine anhand eines in die Werkzeugmaschine eingespannten rotierenden Referenzwerkzeuges (RWZ) umfassend die Schritte:
- Bereitstellen eines aus mehreren Mess-Strahlen (12, 22) zusammengesetzten Mess-Strahls (32);
- Bereitstellen des in die Werkzeugmaschine eingespannten rotierenden Referenzwerkzeugs (RWZ);
- Bewegen des in die Werkzeugmaschine eingespannten rotierenden Referenzwerkzeugs (RWZ) in den zusammengesetzten Mess-Strahl (32);
- Erzeugen mehrerer durch das rotierende Referenzwerkzeug (RWZ) entstehende Abschattungssignale (S1, S2) als Maß für eine Abschattung des zusammengesetzten Mess-Strahls (32) durch das rotierende Referenzwerkzeug (RWZ);
- Bestimmen von zumindest einem Frequenzanteil aus den Abschattungssignalen (S1, S2) als Maß für durch die Werkzeugmaschine und/oder Komponenten in das rotierende Referenzwerkzeug (RWZ) induzierte Schwingungen;
- Bereitstellen einer Information über den Frequenzanteil und/oder Weiterleitung der Information über den Frequenzanteil an einen Bediener und/oder Ausgabegerät.
